# EUROPÄISCHE PATENTSCHRIFT

(11) **EP 3 205 992 B1**
(45) Veröffentlichungstag und Bekanntmachung des Hinweises auf die Patenterteilung: **19.06.2019**
(21) Anmeldenummer: 16155196.5
(22) Anmeldetag: 11.02.2016
(51) Int. Cl.: G01L 1/22, G01G 3/14, B66F 11/04

(54) **ELEKTRISCHE SCHALTUNG, WÄGEZELLE, LASTERFASSUNGSVORRICHTUNG UND FAHRZEUG MIT EINER LASTERFASSUNGSVORRICHTUNG**
ELECTRICAL CIRCUIT, WEIGHING CELL, LOAD DETECTION DEVICE AND VEHICLE WITH A LOAD DETECTION DEVICE
COMMUTATION ELECTRIQUE, CELLULE DE PESAGE, DISPOSITIF DE DETECTION DE CHARGE ET VEHICULE COMPRENANT UN DISPOSITIF DE DETECTION DE CHARGE

(43) Veröffentlichungstag der Anmeldung: 16.08.2017
(73) Patentinhaber: MOBA Mobile Automation AG, 65555 Limburg (DE)
(72) Erfinder: Lipowski, Norbert, 65555 Limburg (DE)
(74) Vertreter: Zimmermann, Tankred Klaus

(56) Entgegenhaltungen:
- DE-A1- 2 332 764
- FR-A1- 3 000 200
- GB-A- 2 450 360
- GB-A- 2 463 915
- US-A- 4 120 195
- US-A- 5 369 226

## Beschreibung

Die vorliegende Erfindung bezieht sich auf eine elektrische Schaltung mit einer DMS-Vollbrückenschaltung, auf eine Wägezelle, auf eine Lasterfassungsvorrichtung, beispielsweise für eine Arbeitsbühne, und auf ein Fahrzeug mit einer Lasterfassungsvorrichtung. Die vorliegende Erfindung bezieht sich insbesondere auf einen Drift-Indikator zur Überwachung des Gleichgewichts innerhalb der Wheatstone'schen DMS-Vollbrücke.

Vollbrückenschaltungen mit DMS-Elementen (DMS = Dehnungsmessstreifen) können eingesetzt werden, um Belastungszustände an mechanisch verformbaren Elementen festzustellen. Ein Beispiel hierfür ist eine Wägezelle, die zwischen einer Arbeitsbühne und einem Kran angeordnet ist, wobei durch eine Verformung von Elementen der Wägezelle auf eine Belastung des Krans durch die Arbeitsbühne geschlossen werden kann.

In einer korrekt arbeitenden Wägezelle mit einer DMS-Vollbrücke herrscht bezüglich der auftretenden elektrischen Spannungen ein Gleichgewicht. Ein Nullpunktdrift zerstört dieses Gleichgewicht, so dass ein durch die elektrischen Spannungen messbarer Belastungszustand von einem tatsächlichen Belastungszustand abweicht. Dies kann dazu führen, dass der Kran überlastet wird, da eine Überlast zu spät angezeigt wird.

Um solche Fehlindikationen zu vermeiden, werden redundante DMS-Vollbrücken eingesetzt, um einen Nullpunktdrift einer DMS-Vollbrücke durch eine andere zu erkennen. Dies hat jedoch zum Nachteil, dass bei abweichenden Ergebnissen der beiden redundanten DMS-Vollbrückenschaltungen nur ein abweichendes Ergebnis erhalten wird, das aber auch auf unterschiedliche Materialdehnungen an unterschiedlichen Orten der unterschiedlichen DMS-Vollbrücken zurückgeführt werden kann. Ferner müssen mehrere Vollbrückenschaltungen angeordnet und ausgewertet werden.

Manche Konzepte gemäß dem Stand der Technik sehen eine Überprüfung des Ausgangssignals der Vollbrückenschaltung in einem unbelasteten Zustand vor. Eine Abweichung des Signalwertes von einem Nullwert kann als Nullpunktdrift erkannt werden. Jedoch ist dies im Betrieb nicht möglich, da durch den Betrieb selbst ein Signalwert erhalten wird, der von dem Nullwert verschieden ist.

In US 4,120,195 ist ein Stresssensor beschrieben, der in Feststoffraketenmotoren einsetzbar ist, und der einen modifizierten Brückenschaltkreis mit temperaturempfindlichen Widerstandselementen aufweist.

In GB 2 450 360 A ist ein Lastüberwachungssystem für eine mobile Arbeitsplattform offenbart, die eine Lastzelle mit mindestens einen Dehnungsmesser und mit einer verbundenen Erfassungsschaltung, zum Erhalten eines Dehnungssignals von dem Dehnungsmesser. Die Erfassungsschaltung umfasst eine erste Erfassungseinrichtung zum Messen der Dehnung in dem Dehnungsmesser und eine zweite Erfassungseinrichtung zum Erfassen einer negativen Verschiebung des Dehnungssignal.

In GB 2 466 915 A ist ein Lastüberwachungssystem ist für eine mobile Arbeitsbühne beschreiben, die zum Anheben der Fahrerplattform relativ zu der Basis eine Bedienerplattform, eine Basis und einen Hebemechanismus enthält. Die Lastüberwachungssystem umfasst eine Lastzelle zum Überwachen der Last auf der Bedienerplattform und eine Steuervorrichtung, um den Betrieb der Arbeitsplattform zu steuern.

In FR 3 000 200 A1 ist ein Wiegemechanismus für einen Hubsteiger mit einem Mast und einer Plattform offenbart, die eine Messzelle aufweist, die zwischen dem Mast und der Plattform angebracht ist. Dieser Mechanismus weist mindestens eine erste Platte versehen mit mindestens einem ersten Durchgangsloch und mindestens eine zweite Platte, mit zumindest einem zweiten Durchgangsloch auf.

Wünschenswert wäre demnach ein Konzept, das es ermöglicht, eine Betriebsbereitschaft einer DMS-Vollbrücke zuverlässig zu erkennen oder sicherzustellen.

Diese Aufgabe wird durch den Gegenstand der unabhängigen Patentansprüche gelöst.

Der Kerngedanke der vorliegenden Erfindung besteht darin, erkannt zu haben, dass eine Symmetrie einer Vollbrückenschaltung durch eine symmetrische Widerstandsschaltung, die mit den Toren der Vollbrückenschaltung verbunden ist, überwachbar ist, indem Widerstandsserienschaltungen so angeordnet werden, dass zwischen Widerständen der Widerstandsserienschaltungen ebenfalls paarweise und symmetrisch zueinander Spannungen erzeugt werden, die von der Symmetrie der Vollbrückenschaltung beeinflusst sind und einen Hinweis auf den Zustand der Vollbrückenschaltungen ermöglichen.

Gemäß einem Ausführungsbeispiel der vorliegenden Erfindung umfasst eine elektrische Schaltung eine DMS-Vollbrückenschaltung, eine erste Widerstandsserienschaltung und eine zweite Widerstandsserienschaltung. Die erste Widerstandsserienschaltung ist zwischen die Anschlüsse eines Energieversorgungstores der DMS-Vollbrückenschaltung geschaltet und weist einen ersten Abgriff zwischen zwei Widerständen auf. Die zweite Widerstandsserienschaltung ist zwischen die Anschlüsse eines Signaltores der DMS-Vollbrückenschaltung geschaltet und weist einen zweiten Abgriff zwischen zwei Widerständen auf. In einem Betrieb der elektrischen Schaltung kann zwischen dem ersten Abgriff und dem zweiten Abgriff eine Spannung erhalten werden, die einen Umfang des Nullpunktdrifts angibt. Vorteilhaft an diesem Ausführungsbeispiel ist, dass die Driftspannung unabhängig von einer Belastung der DMS-Vollbrückenschaltung ist, so dass der Nullpunktdrift auch während Belastungszuständen der DMS-Vollbrückenschaltung erkannt werden kann.

Gemäß weiteren Ausführungsbeispielen umfasst die elektrische Schaltung eine Vergleichseinrichtung, die mit dem ersten Abgriff und dem zweiten Abgriff verbunden ist, und die ausgebildet ist, um einen Vergleich zwischen einem ersten Spannungspotential an dem ersten Abgriff und einem zweiten Spannungspotential an dem zweiten Abgriff auszuführen. Vorteilhaft daran ist, dass die Vergleichseinrichtung durch Vergleich der beiden Spannungspotentiale eine Differenzspannung zwischen den Spannungspotentialen messen oder bestimmten kann und so einen Drift der Vollbrückenschaltung erfassen kann.

Gemäß weiteren Ausführungsbeispielen ist die Vergleichseinrichtung ausgebildet, um basierend auf dem Vergleich der Spannungspotentiale ein Ausgangssignal bereitzustellen, das einen Fehler eines der DMS der DMS-Vollbrückenschaltung anzeigt. Vorteilhaft daran ist, dass das Ausgangssignal für andere Vorrichtungen bereitstellbar und von diesen verwendbar ist, um einen Betrieb einer Gerätschaft, deren Zustand mit der elektrischen Schaltung überwacht werden soll, zu beeinflussen, etwa eine Kranvorrichtung.

Gemäß weiteren Ausführungsbeispielen ist die Vergleichseinrichtung ausgebildet, um basierend auf dem Vergleich ein Ausgangssignal bereitzustellen, das einen Fehler eines der Widerstände der ersten oder zweiten Widerstandsserienschaltung anzeigt. Eine Verschiebung eines Gleichgewichts und/oder einer Symmetrie der Widerstandsserienschaltungen zueinander oder innerhalb der jeweiligen Widerstandsserienschaltung kann zu einer Verschiebung des ersten oder zweiten Spannungspotentials und zum Auftreten einer Driftspannung führen. Vorteilhaft daran ist, dass die überwachenden Komponenten, d. h. die Widerstandsserienschaltungen, ebenfalls mit überwacht werden können.

Gemäß weiteren Ausführungsbeispielen ist die Vergleichseinrichtung ausgebildet, um das zweite Spannungspotential bezüglich einer temperaturbasierten Veränderung eines Widerstands der ersten oder zweiten Widerstandsserienschaltung zu korrigieren, um eine Temperaturinformation zu empfangen, die eine Temperatur an dem zu korrigierenden Widerstand anzeigt, und um die temperaturbasierte Veränderung des zu korrigierenden Widerstands basierend auf der Temperaturinformation zu korrigieren. Vorteilhaft daran ist, dass Fehler der Referenzwiderstände der Widerstandsserienschaltungen durch Temperaturänderung kompensierbar sind, so dass eine Zuverlässigkeit der elektrischen Schaltung hoch ist.

Gemäß weiteren Ausführungsbeispielen ist die Vergleichseinrichtung ausgebildet, um ein Ausgangssignal bereitzustellen, wenn ein Vergleichswert des Vergleichs einen Schwellwert erreicht oder überschreitet. Vorteilhaft daran ist, dass das Ausgangssignal und/oder ein Fehlersignal erst generiert wird, wenn der Schwellwert erreicht oder überschritten ist. So können innerhalb von Toleranzen liegende Veränderungen der Elemente und/oder Herstellungstoleranzen kompensiert und fehlerhafte Alarmsignale vermieden werden.

Weitere Ausführungsbeispiele der vorliegenden Erfindungen schaffen eine Wägezelle mit einer ersten Seite und einer zweiten Seite. Die Wägezelle weist eine elektrische Schaltung gemäß hierin beschriebenen Ausführungsbeispielen auf, die ausgebildet ist, um basierend auf einer mechanischen Belastung an der ersten Seite basierend auf einer Kraft, die auf die zweite Seite wirkt, ein Signal an dem Signaltor der elektrischen Schaltung bereitzustellen. Vorteilhaft daran ist, dass ein Drift in der Wägezelle effizient und platzsparend erkannt werden kann, da auf eine Anordnung einer zweiten Vollbrückenschaltung verzichtet werden kann. Ferner kann ein auftretender Nullpunktdrift auch in einem Betrieb der Wägezelle erkannt werden.

Weitere Ausführungsbeispiele der vorliegenden Erfindung schaffen eine Lasterfassungsvorrichtung für eine Arbeitsbühne mit einem Kranmechanismus zum Bewegen der Arbeitsbühne, wobei der Kranmechanismus an einer Basis befestigbar ist, und einer zwischen dem Kranmechanismus und der Arbeitsbühne angeordneten Wägezelle. Der Kranmechanismus und die Arbeitsbühne sind durch die Wägezelle miteinander verbunden sind. Vorteilhaft daran ist, dass die Belastung des Kranmechanismus durch die Arbeitsbühne mittels der Wägezelle, die die elektrische Schaltung aufweist, in einem Betrieb des Kranmechanismus erfassbar ist. Eine turnusmäßige, bspw. jährliche, Überprüfung der Wägezelle kann hierdurch gegebenenfalls ganz entfallen bzw. ist nur noch im Fehlerfall (auftretender Nullpunktdrift) erforderlich. Alternativ kann der Überprüfungsintervall der Wägezelle in vorteilhafter Weise verlängert werden, bspw. alle zwei Jahre. Somit werden mit der vorliegenden Erfindung auch einige Kosten eingespart.

Weitere Ausführungsbeispiele der vorliegenden Erfindung schaffen ein Fahrzeug mit einer Lasterfassungsvorrichtung gemäß hierin beschriebenen Ausführungsbeispielen. Der Kranmechanismus ist an einem Fahrzeugchassis befestigt.

Bevorzugte Weiterbildungen der vorliegenden Erfindung sind in den Unteransprüchen definiert.

Bevorzugte Ausführungsbeispiele der vorliegenden Erfindung werden nachfolgend Bezug nehmend auf die beiliegenden Zeichnungen erläutert. Es zeigen:
- Fig. 1: ein schematisches Blockschaltbild einer elektrischen Schaltung gemäß einem Ausführungsbeispiel;
- Fig. 2: ein schematisches Blockschaltbild einer elektrischen Schaltung gemäß einem weiteren Ausführungsbeispiel;
- Fig. 3a: einen ersten Zustand der elektrischen Schaltung gemäß Fig. 1 bei angelegter Versorgungsspannung;
- Fig. 3b: die elektrische Schaltung aus Fig. 3a bei einer mechanischen Belastung der Zelle;
- Fig. 3c: die elektrische Schaltung aus Fig. 3b bei einem auftretenden Fehler;
- Fig. 4: eine schematische perspektivische Ansicht einer Wägezelle gemäß einem Ausführungsbeispiel;
- Fig. 5a: eine schematische Ansicht einer Lasterfassungsvorrichtung gemäß einem Ausführungsbeispiel;
- Fig. 5b: eine Verbindungsstelle zwischen einer Arbeitsbühne und einem Kranmechanismus aus Fig. 5a in vergrößerter Darstellung; und
- Fig. 6: eine schematische Darstellung eines Fahrzeugs gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgen beschriebene Ausführungsbeispiele beziehen sich auf einen Drift oder einen Nullpunktdrift einer Vollbrückenschaltung. Der Drift oder Nullpunktdrift bezieht sich auf eine Abweichung einer an der Vollbrückenschaltung erfassbaren Messspannung von einer Sollspannung in einem Referenzzustand. Der Referenzzustand kann als unbelasteter Zustand oder Kalibrierzustand verstanden werden. Ausgehend von dem Referenzzustand kann sich mit zunehmender (mechanischer) Belastung der Vollbrückenschaltung ein erstes Signal in dem Maße erhöhen, in dem sich ein zweites Signal verringert, so dass ein zunehmender Betrag einer Spannungsdifferenz ein Maß für die Belastung der Vollbrückenschaltung darstellt. Im Referenzzustand kann eine Referenzspannung, etwa eine Spannungsdifferenz von 0 V vorliegen. Durch Fehler in der Vollbrückenschaltung kann in dem Referenzzustand eine Spannungsdifferenz von ungleich 0 V auftreten, was nachfolgend als Drift oder Nullpunktdrift der Vollbrückenschaltung bezeichnet wird.

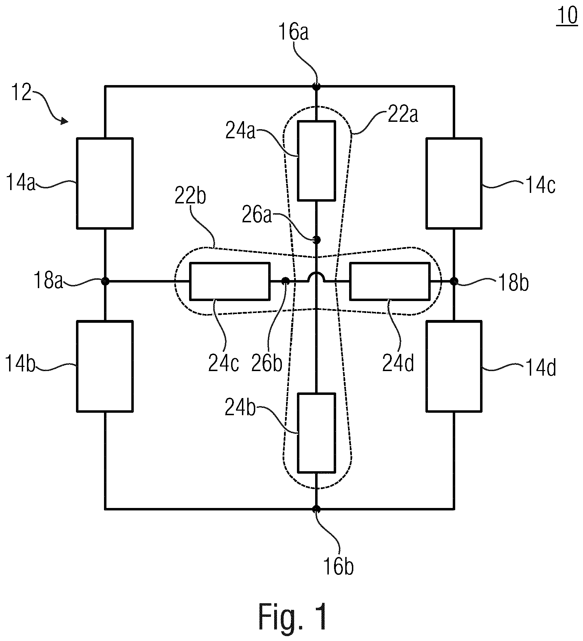

Fig. 1 zeigt ein schematisches Blockschaltbild einer elektrischen Schaltung 10 gemäß einem Ausführungsbeispiel. Die elektrische Schaltung 10 umfasst eine DMS-Vollbrückenschaltung 12, die vier DMS (Dehnungsmessstreifen) 14a-14d umfasst. Die DMS 14a-14d können zu einer Wheatstone'schen Brückenschaltung verschaltet sein. Die DMS-Vollbrückenschaltung 12 umfasst Energieversorgungsanschlüsse 16a und 16b, die ein Energieversorgungstor der DMS-Vollbrückenschaltung bilden. Zwischen den Anschlüssen 16a und 16b sind jeweils zwei Serienschaltungen umfassend zwei der DMS 14a und 14b oder 14c und 14d angeordnet.

Die DMS-Vollbrückenschaltung 12 umfasst ferner Signalanschlüsse 18a und 18b, die ein Signaltor der DMS-Vollbrückenschaltung bilden. Das Energieversorgungstor ist mit einer Versorgungsspannung für die DMS 14a-14d verbindbar, woraufhin basierend auf einer Veränderung eines Zustands der DMS ein Signal an dem Signaltor erhalten werden kann. Bei dem Zustand kann es sich um einen Belastungszustand handeln, der zu einer Dehnung oder Stauchung der DMS führt.

Die elektrische Schaltung 10 umfasst ferner eine erste Widerstandsserienschaltung 22a, die zwischen die Anschlüsse 16a und 16b geschaltet ist. Die Widerstandsserienschaltung 22a umfasst zwei seriell verschaltete Widerstände 24a und 24b, zwischen denen ein Abgriff 26a angeordnet ist. An dem Abgriff 26a ist ein Potential zwischen den Widerständen 24a und 24b abgreifbar oder messbar.

Eine zweite Widerstandsserienschaltung 22b ist zwischen die Anschlüsse 18a und 18b geschaltet und umfasst zwei in Serie verschaltete Widerstände 24c und 24d, zwischen denen ein Abgriff 26b angeordnet. An dem Abgriff 26b ist ein Potential zwischen den Widerständen 24c und 24d abgreifbar oder messbar.

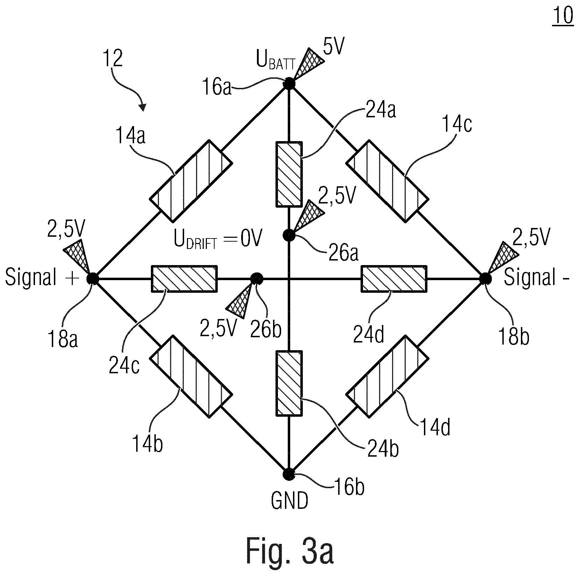

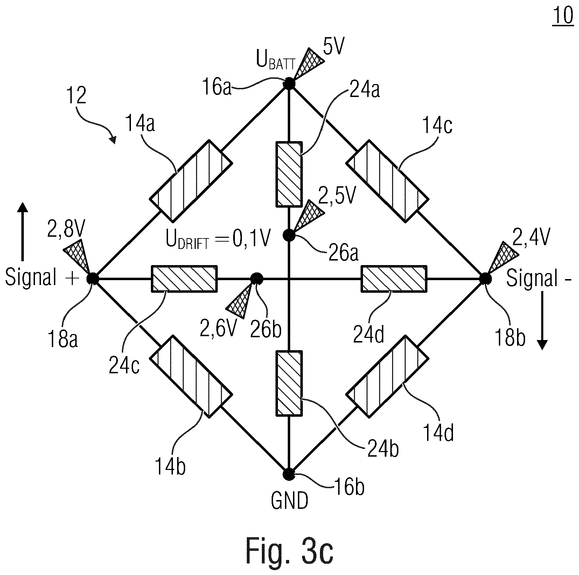

Vorzugsweise sind die DMS 14a-14d gleich ausgebildet. Das bedeutet, dass eine mechanische und/oder elektrische Abweichung zwischen den DMS 14a-14d gering, näherungsweise 0 oder gleich 0 ist. Vorzugsweise sind die Widerstände 24a-24d gleich ausgebildet. Das bedeutet, sie weisen vorzugsweise einen gleichen Widerstandswert, eine gleiche mechanische Belastbarkeit und/oder eine gleiche temperaturbedingte Widerstandsänderung auf. Gemäß Ausführungsbeispielen ist vorgesehen, dass die Wiederstände auf eine gleiche temperaturbedingte Widerstandsänderung ausgeführt werden können, wie es im Zusammenhang mit Fig. 3c beschreiben ist. Die Symmetrie zwischen den DMS und die Symmetrie zwischen den Widerständen ermöglicht eine Erkennung einer auftretenden Veränderung von Elementen, wie es anhand der Fig. 3a-3c erläutert ist.

Bei dem DMS kann es sich um elektrische Widerstände handeln, deren Widerstandswerte sich basierend auf einer mechanischen Deformation ändern. Alternativ kann es sich bei den DMS auch um andere dehnungsempfindliche Messelemente handeln, wie etwa um optische DMS, die beispielsweise als Faser-Bragg-Gitter bezeichnet werden. Bei optischen DMS kann eine Dehnung oder Stauchung durch eine Verschiebung von Spektren elektromagnetischer Strahlung festgestellt werden. Diese Verschiebung kann unter Verwendung optoelektronischer Wandler in eine elektrische Spannung überführt werden, so dass die Prinzipien der Vollbrückenschaltung uneingeschränkt auch für optische DMS anwendbar sind.

Hierin beschriebene Ausführungsbeispiele sind auch für andere Vollbrückenschaltungen anwendbar. Anstelle der DMS können Messelemente zur Erfassung einer beliebigen physikalischen Größe, etwa einer Temperatur, eines Drucks oder eines pH-Werts angeordnet werden, die elektrisch leitfähig sind oder ein elektrisches Signal ausgeben. Die Elemente der Widerstandsserienschaltung können durch elektrisch leitende oder ein elektrisches Signal bereitstellende Elemente implementiert werden, die von der physikalischen Größe in einem veränderten Umfang (geringer, näherungsweise nicht oder verstärkt) beeinflusst sind.

Die Widerstände 24a-24d können beliebige Widerstände sein. Vorzugsweise sind die Widerstände 24a-24d aus hochwertigen temperaturstabilen Widerständen gebildet. Der Widerstandswert kann hierbei beliebig sein. Um einen Energieverbrauch der elektrischen Schaltung 10 niedrig zu halten, können jedoch Widerstände verwendet werden, die einen Widerstandswert von zumindest 1 kΩ und höchstens 100 MΩ, von zumindest 5 kΩ und höchstens 80 MΩ oder von zumindest 8 kΩ und höchstens 50 MΩ, beispielsweise 10 kΩ aufweisen. Dies ermöglicht eine hohe Flexibilität in der Leistungsauslegung (engl.: Power Management) der elektrischen Schaltung 10. Dabei ist es auch möglich, dass die Widerstände 24a-24d einen Widerstandswert im Bereich bzw. in der Größenordnung von ungefähr 350 Ω bis 1 kΩ aufweisen und/oder in etwa einem Widerstandswert der DMS entspricht.

Die Widerstandsserienschaltungen 22a und 22b können jeweils als Spannungsteiler beschrieben werden, an deren Abgriff 26a oder 26b eine Hilfsspannung erhalten und erfasst werden kann. Es wird darauf hingewiesen, dass obwohl die Widerstandsserienschaltungen 22a und 22b jeweils so beschrieben sind, dass sie zwei Widerstände 24a und 24b bzw. 24c und 24d aufweisen, jeder der Widerstände 24a-24d auch durch eine Mehrzahl oder Vielzahl von Widerständen gebildet sein kann. Obwohl hierin erläuterte Ausführungsbeispiele so beschrieben sind, dass an den Abgriffen 26a und 26b im fehlerfreien Fall jeweils die Hälfte der Spannung zwischen den Anschlüssen 16a und 16b bzw. zwischen den Anschlüssen 18a und 18b erhalten wird, sind elektrische Schaltungen gemäß weiteren Ausführungsbeispielen so konfiguriert, dass an den Abgriffen 26a oder 26b ein von (bezogen auf das Versorgungspotential) 50 % verschiedenes Spannungsniveau erhalten wird. Weisen die Widerstände 24a und 24b beispielsweise voneinander verschiedene Widerstandswerte auf, so kann durch den so erhaltenen asymmetrischen Spannungsteiler ein beliebiges Spannungsniveau erhalten werden. Gleiches gilt für die Widerstandsserienschaltung 22b.

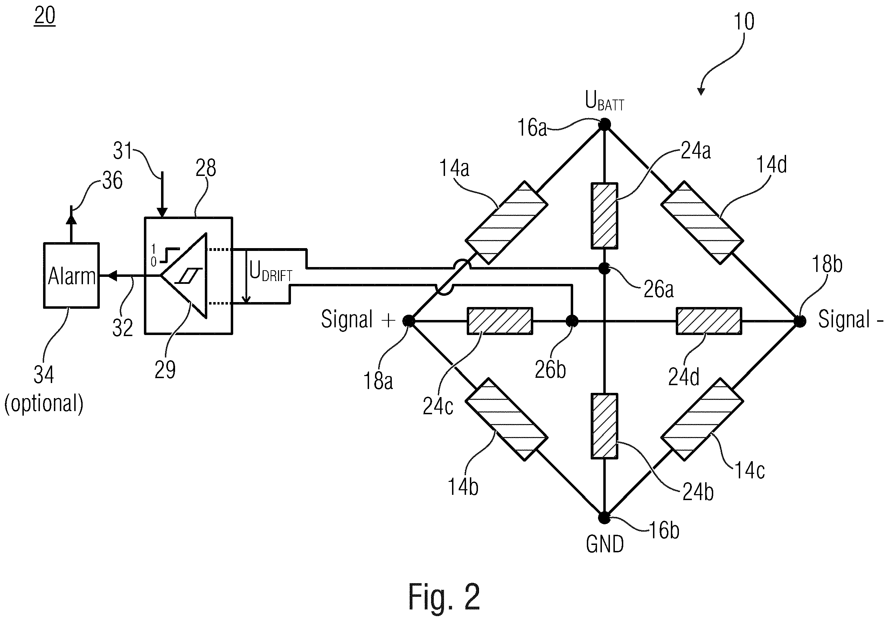

Fig. 2 zeigt ein schematisches Blockschaltbild einer elektrischen Schaltung 20 gemäß einem weiteren Ausführungsbeispiel. Die elektrische Schaltung 20 umfasst die elektrische Schaltung 10, wie sie im Zusammenhang mit der Fig. 1 beschrieben ist, und eine Vergleichseinrichtung 28, die mit dem ersten Abgriff 26a und dem zweiten Abgriff 26b verbunden ist. Die Vergleichseinrichtung 28 ist ausgebildet, um einen Vergleich zwischen dem ersten Spannungspotential an dem ersten Abgriff 26a und dem zweiten Spannungspotential an dem zweiten Abgriff 26b auszuführen. Dies kann so erfolgen, dass ein jeweiliges Spannungspotential an dem Abgriff 26a und dem Abgriff 26b gegen eine Referenzspannung, beispielsweise 0 V oder Masse (engl.: Ground-GND) erfasst und gegeneinander verglichen wird. Alternativ können auch die beiden Spannungspotentiale an den Abgriffen 26a und 26b direkt gegenübergestellt werden. Zwischen den Spannungspotentialen an den Abgriffen 26a und 26b stellt sich eine Differenzspannung U_{DRIFT} ein, die von der Vergleichseinrichtung 28 erfasst wird. In einem symmetrischen oder fehlerfreien Zustand, in dem beispielsweise die DMS 14a-14d und die Widerstände 24a-24d gleich zueinander gebildet sind, weist die Spannung U_{DRIFT} einen Wert von 0 V oder näherungsweise 0 V auf.

Die Vergleichseinrichtung 28 ist ausgebildet, um ein Ausgangssignal 32 bereitzustellen, das einen Fehler eines der DMS 14a-14d der DMS-Vollbrückenschaltung anzeigt. Alternativ oder zusätzlich kann die Vergleichseinrichtung ausgebildet sein, um basierend auf dem Vergleich der Spannungspotentiale das Ausgangssignal 32 so bereitzustellen, dass es einen Fehler eines der Widerstände 24a-24d anzeigt. Das Ausgeben des Ausgangssignals kann von einer Bedingung abhängig sein, etwa wenn die Vergleichseinrichtung eine Logik aufweist. Beispielsweise kann die Vergleichseinrichtung 28 einen Komparator 29 aufweisen, etwa um das Erfüllen einer Bedingung (Erreichen, Unterschreiten oder Überschreiten eines Schwellwertes) des Ausgangssignals zu überprüfen und/oder, um das Ausgangssignal 32 in einer digitalisierten Form auszugeben. Alternativ kann das Ausgangssignal 32 auch eine verstärkte, unverstärkte oder gedämpfte Version des Spannungsverlaufs der Spannung U_{DRIFT} sein.

Dabei ist es auch möglich, dass die Vergleichseinrichtung 28 einen Mikrocontroller mit mindestens zwei A/D-Differenzwandler aufweist (hier nicht dargestellt), wobei die AD-Differenzwandler mit dem ersten Abgriff 26a und dem zweiten Abgriff 26b sowie mit den Signalanschlüssen 18a (Signal+) und 18b (Signal-) verbunden sind. Der Mikrocontroller weist weiterhin die übliche Peripherie wie bspw. eine CPU, einen Speicher (RAM, ROM) zur Ablage von Programmcode und weiteren Daten usw. auf. Mit dem Mikrocontroller kann ebenfalls das Erfüllen einer Bedingung (Erreichen, Unterschreiten oder Überschreiten eines Schwellwertes) des Ausgangssignals überprüft werden und/oder das Ausgangssignal 32 in einer digitalisierten Form ausgegeben werden. Alternativ kann das Ausgangssignal 32 auch eine verstärkte, unverstärkte oder gedämpfte Version des Spannungsverlaufs der Spannung U_{DRIFT} sein. Im Mikrocontroller kann weiterhin ein Temperatursensor bzw. -fühler integriert sein. Es ist jedoch auch denkbar, an den Mikrocontroller einen separaten und/oder zusätzlichen Temperatursensor bzw. -fühler oder auch temperaturabhängigen Widerstand anzuschließen.

Gemäß einer vorteilhaften Weiterbildung ist die Vergleichseinrichtung 28 so konfiguriert, um das Ausgangssignal 32 bereitzustellen, wenn ein Widerstand 24a-24d oder ein DMS 14a-14d einen Fehler aufweist. Ein Fehler kann beispielsweise eine mechanische oder elektrische Schädigung eines Widerstands 24a-24d oder DMS 14a-14d sein. Alternativ oder zusätzlich kann ein DMS auch als fehlerhaft betrachtet werden, wenn ein Substrat oder Material, an dem der DMS 14a-14d befestigt ist, lokal eine Verformung aufweist, so dass der DMS in zumindest einem, in mehreren oder in allen Belastungszuständen des Substrats einen von anderen DMS verschiedenen Widerstandswert aufweist. Weitere Fehlerfälle, die detektierbar sind, sind fehlerhafte Verbindungsstellen zwischen Leitungen und DMS oder Widerständen oder alterungsbedingte Veränderungen der Elemente, beispielsweise durch Materialermüdung. Auch wenn manche dieser Fehler außerhalb der DMS oder Widerstände liegen, können sie detektiert werden, da sie sich auf die elektrische Leitfähigkeit der Schaltung bzw. deren Symmetrie auswirken.

Die elektrische Schaltung 20 kann einen optionalen Alarmsignalgeber 34 aufweisen, der ausgebildet ist, um das Ausgangssignal 32 zu empfangen und um ein Alarmsignal 36 auszugeben. Das Alarmsignal kann ein beliebiges Signal, etwa elektrisch oder optisch sein. Zwischen dem Ausgeben des Alarmsignals 36 und dem Ausgangssignal 32 kann eine beliebige Konditionierung in dem Alarmsignalgeber 34 hinterlegt sein. Beispielsweise kann der Alarmsignalgeber so ausgebildet sein, dass er das Alarmsignal 36 ausgibt, wenn eine Amplitude, eine Frequenz oder ein Stromwert des Ausgangssignals 32 einen Schwellwert erreicht oder überschreitet. Beispielsweise ist das Ausgangssignal 32 direkt oder indirekt proportional zu der Amplitude der Spannung U_{DRIFT} und in dem Alarmsignalgeber 34 ein zu erreichender oder zu überschreitender Schwellwert hinterlegt. Alternativ ist der Alarmsignalgeber ausgebildet, um das Alarmsignal 36 auszugeben, wenn das Ausgangssignal 32 anliegt oder nicht anliegt, etwa wenn die Vergleichseinrichtung 28 ausgebildet ist, um das Ausgangssignal 32 auszugeben, wenn eine Amplitude Der Spannung U_{DRIFT} den Schwellwert erreicht oder überschreitet. Alternativ kann der Alarmgeber auch als Teil der Vergleichseinrichtung 26 gebildet sein.

Wird zwischen den Anschlüssen 16a und 16b eine Versorgungsspannung angelegt, wie es durch U_{BATT} und GND angedeutet ist, so kann an den Anschlüssen 18a und 18b ein Signal in Form einer Potentialdifferenz zwischen den Anschlüssen 18a und 18b erhalten werden, wie es durch Signal+ und Signal- angedeutet ist. Auf die Funktion der elektrischen Schaltung 10 wird nachfolgend näher eingegangen.

Ferner kann die Vergleichseinrichtung 28 ausgebildet sein, um eine Temperaturinformation 31 zu empfangen. Die Temperaturinformation kann eine Temperatur an einem oder mehreren Widerständen 24a-24d anzeigen. Die Vergleichseinrichtung kann ausgebildet sein, um eine temperaturbasierte Veränderung eines zu korrigierenden Widerstands oder mehrerer zu korrigierender Widerstände basierend auf der Temperaturinformation 31 bzgl. eines Widerstandswertes zu korrigieren. Die Vergleichseinrichtung 28 kann somit ausgebildet sein, um ein entsprechendes Potential an dem Abgriff 26a und/oder 26b bzgl. der temperaturbedingten Veränderung des Widerstandswertes entsprechend zu korrigieren. Hierfür können beispielsweise eine Temperaturkennlinie der Widerstände und/oder Referenzwiderstände 24a-24d in der Vergleichseinrichtung hinterlegt sein. Die Differenzspannung der Referenzbrücke, d. h. die Spannung U_{DRIFT} kann durch einen A/D-Wandler (Analog-Digital-Wandler) digitalisiert werden. Nach einer erhaltenen Temperaturkorrektur kann dieser (korrigierte) Messwert mit einem Belastungszustand einer Vorrichtung, an der die DMS-Vollbrückenschaltung 12 angeordnet ist, korreliert werden, beispielsweise dem Referenzzustand oder 0 kg. Jegliche Änderung um 0 kg herum kann als Drift in Kilogramm interpretiert werden, d. h. als mechanische Belastung der DMS-Vollbrückenschaltung 12, wenn für die Widerstände derselbe Kalibrierfaktor verwendet wird, der zu Berechnung der tatsächlichen Belastung der DMS-Brücke verwendet wird. Die Anwendung einer zuvor hinterlegten Temperaturkennlinie auf das Ausgangssignal der beiden Spannungsteiler bzw. Widerstandsserienschaltungen 22a und 22b in Abhängigkeit der aktuell gemessenen Temperatur eliminiert einen Temperatureinfluss auf die Widerstände 24a/24b und 24c/24d. Die Temperaturkennlinie kann dabei als eine Liste von Korrekturfaktoren bezogen auf die jeweilige Temperatur (sog. Lookup-Table) realisiert sein oder während des Betriebs ermittelt oder bestimmt werden. Mit der Anwendung der Temperaturkennlinie wird über den gesamten Temperaturbereich eine immer gleiche Ausgangsspannung der Spannungsteiler 22a und 22b erreicht.

Nachfolgend wird anhand der Fig. 3a-3c Bezug genommen auf die Funktionsweise der elektrischen Schaltung 10, wobei sich die Ausführungen uneingeschränkt auch auf die elektrische Schaltung 20 beziehen.

Fig. 3a zeigt einen ersten Zustand der elektrischen Schaltung 10 bei angelegter Versorgungsspannung. In dem ersten Zustand liegen ein unbelasteter Fall der DMS-Vollbrückenschaltung 12 und fehlerfreie Komponenten derselben sowie der beiden Widerstandsserienschaltungen vor. Zur Veranschaulichung werden nachfolgend beschriebene Ausführungsbeispiele so beschrieben, dass die Spannung U_{BATT} gegenüber der Referenzspannung GND eine Spannungsdifferenz von 5 V aufweist. Gemäß anderen Ausführungsbeispielen ist eine beliebige Versorgungsspannung an die DMS-Vollbrückenschaltung 12 anlegbar, beispielsweise zumindest 0,1 V und höchstens 1000 V, zumindest 1 V und höchstens 100 V oder zumindest 2,5 V und höchstens 20 V.

Basierend auf der Symmetrie der elektrischen Schaltung 10 fällt die Versorgungsspannung U_{BATT} zu gleichen Teilen über die DMS 14a und 14b und zu gleichen Teilen über die DMS 14c und 14d ab. An den Anschlüssen 18a und 18b des Signaltores liegt jeweils die halbe Versorgungsspannung, d. h. 2,5 V an, so dass sich ein Ausgangssignal der DMS-Vollbrückenschaltung in Form von (Signal+) - (Signal-) zu 0 V ergibt. Deshalb liegt auch eine Spannung von 2,5 V (gegenüber der Referenzspannung GND) von 2,5 V an dem Abgriff 26b an. Über die symmetrischen, d. h. gleichen Widerstände 24a und 24b fällt die Versorgungsspannung U_{BATT} ebenfalls zu gleichen Teilen ab, so dass an dem Abgriff 26a ebenfalls eine Spannung von 2,5 V anliegt. Die Driftspannung U_{DRIFT} zwischen den Abgriffen 26a und 26b beträgt somit 0 V.

In anderen Worten wird im unbelasteten Fall in der Diagonalen der DMS-Vollbrückenschaltung 12 zwischen Signal+ und Signal- eine Spannung von näherungsweise 0, etwa 0 mV, gemessen. Im Idealfall sind die DMS-Widerstände 14a-14d gleich, so dass gilt Signal+ = Signal- = 2,5 V. Damit sind auch die Hilfsspannungen an den Abgriffen 26a und 26b gleich 2,5 V. Die Prüfspannung kann als Differenz zwischen den Hilfsspannungen angegeben werden, wobei in dem ersten Fall gilt, dass U_{DRIFT} = 0 V.

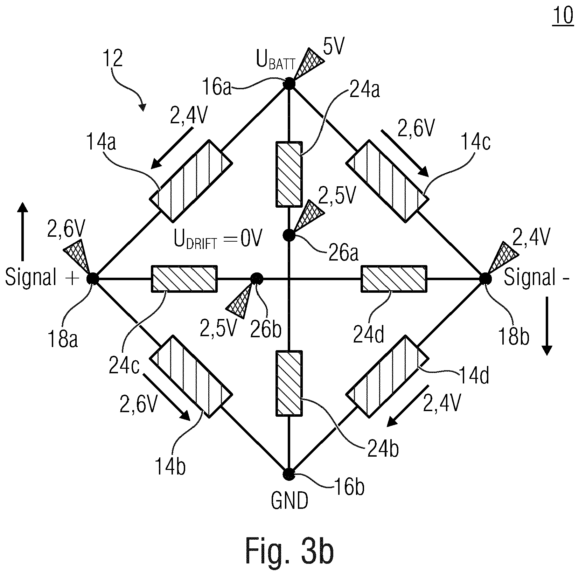

Fig. 3b zeigt die elektrische Schaltung 10 in einem zweiten Fall, der eine mechanische Belastung der Zelle, d h. der DMS-Vollbrückenschaltung 12 beschreibt. In dem belasteten Zustand können sich die Widerstandswerte der DMS 14a und 14b bzw. 14c und 14d jeweils gegensinnig zueinander verändern. Beispielsweise kann der DMS 14a einen verringerten und der DMS 14b einen erhöhten Widerstandswert aufweisen. An dem Anschluss 18a liegt bspw. ein Potential von 2,6 V an. An dem Anschluss 18b liegt bspw. ein Potential von 2,4 V an. Daraus ergibt sich eine Signaldifferenz von 0,2 V zwischen den Anschlüssen 18a und 18b. Diese Signaldifferenz ist im Idealfall symmetrisch um die mittlere Spannung von 2,5 V, die an dem Abgriff 26b anliegt. Im betrachteten Idealfall sind die Widerstände 24a-24d unabhängig von der mechanischen Verformung, so dass an dem Mittenabgriff 26a weiterhin das Potential in Höhe von 2,5 V anliegt, so dass die Spannung U_{DRIFT} weiterhin 0 V beträgt. Das bedeutet, im belasteten Fall können die Hilfsspannungen immer noch gleich sein.

In anderen Worten können sich die DMS-Widerstände 14a-14d im belasteten Fall gleichmäßig ändern. Durch die Verschaltung wird die Spannung Signal+ an dem Anschluss 18a größer und die Spannung Signal- an dem Anschluss 18b kleiner. Die Signalspannung der DMS-Vollbrückenschaltung 12 ändert sich entsprechend der Differenz. Die Hilfsspannungen stellen sich auch hier aus dem Gleichgewichtsprinzip wieder auf 2,5 V ein. Damit wird die Prüfspannung wie im unbelasteten Zustand bei 0 V bleiben.

Das bedeutet, dass die Driftspannung U_{DRIFT} auch im belasteten Fall der DMS-Vollbrückenschaltung 12 als Indikator für die Unversehrtheit der Elemente heranziehbar ist. Die Vergleichseinrichtung kann ausgebildet sein, um das Ausgangssignal unabhängig von einer Verformung der DMS 14a-14d zu liefern. Ferner kann die Vergleichseinrichtung ausgebildet sein, um den Vergleich in einem Referenzzustand, wie er in Fig. 3a dargestellt ist, und in einem Belastungszustand, wie er in Fig. 3b dargestellt ist, der DMS-Vollbrückenschaltung 12 auszuführen.

Fig. 3c zeigt die elektrische Schaltung 10 in einem dritten Zustand, bei dem die DMS 14a-14d mechanisch verformt werden, so dass sie ihren Widerstandswert ändern, wie es im Zusammenhang mit Fig. 3b beschrieben ist. Darüber hinaus weist die DMS-Vollbrückenschaltung 12 einen Fehlerfall auf, der im vorliegenden Beispiel dadurch erhalten wird, dass der DMS 14a seinen Widerstandswert unabhängig von einem Belastungszustand geändert hat, etwa durch Beschädigung oder Alterung. Beispielsweise hat der DMS 14a seinen Widerstandswert verringert. In dem Belastungszustand der Fig. 3b wird auch in diesem Fehlerzustand eine Spannung von 2,4 V an dem Anschluss 18b, dessen DMS-Pfad unbeeinträchtigt ist, erhalten. Durch die Asymmetrie der DMS 14a und 14b stellt sich jedoch eine anderes, etwa höheres Potential an dem Anschluss 18a ein. Bspw. stellt sich ein Potential von 2,8 V anstelle von 2,6 V ein. Vereinfacht ausgedrückt wird durch die Veränderung des DMS 14a das Gleichgewicht innerhalb der Brücke zerstört. Das führt dazu, dass bei einem vergleichbaren Belastungszustand der DMS-Vollbrückenschaltung 12 im Vergleich zur Fig. 3b ein veränderter und mithin verfälschter Signalwert an dem Anschluss 18a und somit auch in der Differenzspannung (Signal+) - (Signal-) = 0,4 V erhalten wird.

An dem Abgriff 26a liegt basierend auf der Symmetrie der Widerstände 24a und 24b weiterhin das Potential 2,5 V an. Durch die veränderte Spannung an dem Anschluss 18a ist jedoch das elektrische Potential an dem Abgriff 26b hiervon verschieden, so dass sich beispielhaft eine Differenzspannung U_{DRIFT} von 0,1 V ergibt. Dies kann von der Vergleichseinrichtung erfasst und eine darauf basierende Information durch das Ausgangssignal ausgegeben werden.

In anderen Worten sind im Fehlerfall, d. h., ein DMS liefert einen Drift, die Hilfsspannungen an den Abgriffen 26a und 26b nicht mehr gleich. Da sich die Hilfsspannung zwischen den Signalanschlüssen 18a und 18b auf einen Mittelwert von 2,6 V einstellt, wird die Differenz zwischen den Hilfsspannungen nicht mehr 0 V sein. Dies kann als Signal dafür interpretiert werden, dass die Zelle - belastungsunabhängig - einen Nullpunktdrift erfahren hat.

Wie es im Zusammenhang mit der Fig. 2 dargestellt ist, kann über einen Komparator, etwa der Komparator 29, eine Schwellspannung eingestellt werden, damit eine Mindestabweichung (Schwellwert) der Driftspannung U_{DRIFT} erst erreicht oder überschritten werden muss, damit ein Ausgangssignal und/oder Fehlersignal generiert wird. Die Vergleichseinrichtung kann ausgebildet sein, um das Ausgangssignal so auszugeben, dass bei einer Gleichheit des Spannungspotentials an dem Abgriff 26a und des Spannungspotential an dem Abgriff 26b angezeigt wird, dass kein Drift vorliegt, und dass bei einer Ungleichheit der Spannungspotentiale an den Abgriffen 26a und 26b angezeigt wird, dass ein Drift der elektrischen Schaltung vorliegt.

Um eine hohe Robustheit der elektrischen Schaltung zu erhalten, kann eine angeordnete Vergleichseinrichtung 28 ausgebildet sein, um eines oder mehrere der erhaltenen Signale bezüglich temperaturbedingter Änderungen der Widerstände 24a-d zu korrigieren. Hierfür wird nachfolgend folgende Betrachtung herangezogen, wobei die angegebenen Werte lediglich beispielhaft und nicht einschränkend zu verstehen sind. Weisen die Widerstände 24a-24d beispielsweise einen Widerstandswert R von 350 Ω und einen Temperaturänderungskoeffizienten T_{K} von 5 ppm (ppm = Parts per Million, Anteile pro Millionen) auf und ist die DMS-Vollbrückenschaltung 12 so konfiguriert, dass eine Signaländerung erhalten wird, die 1 mV/V bei 1000 kg Belastung einer Struktur, an der die DMS-Vollbrückenschaltung 12 entspricht, so kann bei einer beispielhaften Versorgungsspannung von 5 V der DMS-Vollbrückenschaltung folgendes Szenario erhalten werden:
Ein DMS innerhalb der Messbrücke kann sich so durch Alterung, Fertigungstoleranzen oder Beschädigung so verändern, dass die Messbrücke eine Signaländerung von umgerechnet 1 kg liefert. Das entspricht einer Signalspannungsänderung zwischen Signal+ und Signal- von 5 µV. Die Mittenspannung der beiden Referenzwiderstände 24c und 24d zwischen den Anschlüssen 18a und 18b wird demnach eine Änderung um 2,5 µV erfahren. Die Fehler der Referenzwiderstände bei Temperaturänderung um 40 °C ergibt sich zu: 5/1000000 °C * 350 Ω * 40 °C = 70 mΩ; wobei sich der Widerstandswert der Referenzwiderstände immer innerhalb einer vorgegeben bzw. zulässigen Temperaturabhängigkeit (Angabe in ppm) bewegt. In einem Spannungsteiler der Referenzwiderstände stellt sich demnach eine Spannung von 5 V * 350 Ω/700,070 Ω = 2,499750 V ein. D. h., es wird eine Änderung der Driftspannung von 2,5 V-2,499750 V = 250 µV erhalten, was einer Änderung von 100 kg entspricht. Eine derartige Fehlinformation kann zu einem verspäteten oder verfrühtem Alarmsignal oder einem Fehlerverhalten einer Steuerung führen. Basierend auf der vorangehend beschriebenen Temperaturkompensation durch die Vergleichseinrichtung 28 kann eine derartige Abweichung reduziert oder verhindert werden, so dass eine hohe Präzision des Alarm- oder Fehlersignals erhalten wird, was vorteilhaft ist. In diesem Zusammenhang sei noch anzumerken, dass Widerstände oft oder gar immer einer Temperaturabhängigkeit unterliegen können. Dabei kann sich nicht nur die Höhe der Abhängigkeit unterscheiden sondern auch deren Richtung (Vorzeichen). Beispielsweise können bei einer positiven Temperaturänderung drei von vier Widerständen eine Widerstandserhöhung erfahren, und der vierte Widerstand eine Widerstandserniedrigung. Von daher kann es sinnvoll sein, wie oben angegeben, einen Vergleich mit einem oder mehreren Referenzwiderständen durchzuführen, welche eine vorgegebene bzw. zulässige Temperaturabhängigkeit aufweisen. Diese Temperaturabhängigkeit bzw. der Bereich, innerhalb sich ein Widerstandswert eines Referenzwiderstandes bei einer Temperaturänderung bewegt, kann innerhalb der zulässigen Gesamtfehlergrenzen liegen, welche sich für die Referenzwiderstände aus Toleranz, Temperaturabhängigkeit etc. ergeben.

Ein weiterer Vorteil vorangehend beschriebener Ausführungsbeispiele liegt darin, dass auch die Funktion der Widerstände 24a-d überprüfbar und/oder überwachbar ist. Sollte sich ein Widerstand einer Widerstandsserienschaltung ändern, etwa aus produktions- oder alterungstechnischen Gründen oder aufgrund eines Schadens, so ist die Funktion der elektrischen Schaltung, d. h. des Driftindikators, nicht gefährdet. Ein vom Normalzustand verschiedenes Driftsignal, etwa ungleich 0 V, wird in diesem Fall dennoch ausgegeben, obwohl die Ursache nicht in den DMS 14a-14d liegt. Dies kann jedoch dennoch so aufgefasst werden, dass eine Überprüfung der elektrischen Schaltung 10 erforderlich ist. Sicherheitstechnisch kann somit ein Ein-Fehler-Fall für DMS und Widerstände abgedeckt werden. Ferner kann eine Selbstüberwachung der überwachenden Elemente, d. h. der Widerstände 24a-24d erhalten werden.

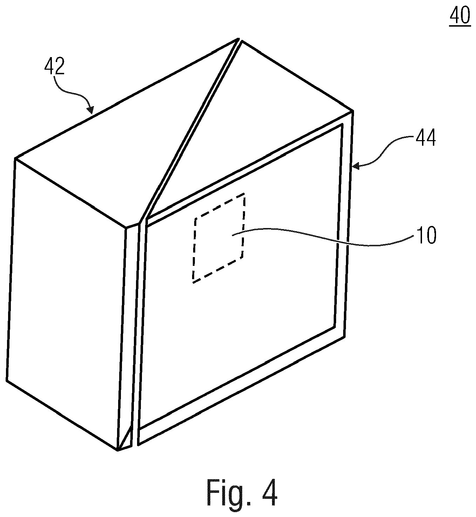

Fig. 4 zeigt eine schematische perspektivische Ansicht einer Wägezelle 40 gemäß einem Ausführungsbeispiel. Die Wägezelle 40 umfasst die elektrische Schaltung 10. Alternativ kann die Wägezelle 40 auch die elektrische Schaltung 20 umfassen. Die Wägezelle 40 weist eine erste Seite 42 und eine zweite Seite 44 auf, die mit unterschiedlichen mechanischen Komponenten verbindbar sind. Bspw. kann eine Seite mit einer Basis und die andere Seite mit einer Referenzstruktur verbunden werden. Bei der Referenzstruktur kann es sich um eine Arbeitsbühne, um eine Waagschale oder Waagebene zum Wiegen eines Objekts oder dergleichen handeln. Eine Bewegung der unterschiedlichen mechanischen Komponenten zueinander oder eine Kraft, die auf zumindest eine der unterschiedlichen mechanischen Komponenten und mithin auf zumindest eine der Seiten 42 oder 44 wirkt, kann zu einer Belastung der Wägezelle 40, zu einer Deformation von Komponenten hiervon und mithin zu einer Belastung der DMS-Vollbrückenschaltung 12 führen.

Bei der Kraft kann es sich alternativ oder zusätzlich auch um eine Gewichtskraft handeln, d. h., basierend auf der Wägezelle 40 kann auch eine Gewichtsbelastung der ersten Seite 42 gegenüber der zweiten Seite 44 oder anders herum erfassbar sein.

Ausführungsbeispiele beziehen sich auf Lasterfassungsvorrichtungen. Lasterfassungsvorrichtungen sind bspw. ausgebildet, um eine Last, die auf ein Element oder eine Vorrichtung wirkt, zu erfassen. Ein Anwendungsgebiet von Lasterfassungsvorrichtungen sind Hubarbeitsmaschinen, die ausgebildet sind, um eine Last anzuheben. Beispielhafte Hubarbeitsmaschinen sind Kräne, (Gabel-)Stapler, Müll- oder Containerfahrzeuge oder Radlader, wobei diese Aufzählung nicht abschließend ist. Lasterfassungsvorrichtungen für Hubarbeitsmaschinen gemäß hierin beschriebener Ausführungsbeispiele umfassen bspw. ein Mechanismus zum Bewegen einer Last, wie etwa einen Kran, eine Hebevorrichtung oder dergleichen. Der Mechanismus ist an einer Basis befestigbar, etwa an einem Fahrzeug oder einer Struktur gegenüber der die Last bewegt werden soll. Zwischen dem Mechanismus und der Last ist eine Wägezelle angeordnet. Der Mechanismus und die Last sind durch die Wägezelle miteinander verbunden, so dass eine Belastung der Last auf den Mechanismus und/oder von dem Mechanismus auf die Last präzise erfassbar ist.

In anderen Worten kann eine elektrische Schaltung oder eine Wägezelle gemäß hierin beschriebenen Ausführungsbeispielen mit Hubarbeitsmaschinen verbunden werden, wo eine Last- und/oder Gewichtserfassung wünschenswert ist, wie etwa Hubarbeitsbühnen oder andere industrielle Anwendungen, d. h., Vorrichtungen oder Systemen. Beispielsweise, jedoch nicht abschließend, wird eine Wägezelle mit Fahrzeugen, wie einem (Gabel)Stapler, einem Müllfahrzeug (etwa einer Wägezelle zum Wiegen einer Tonne), einem Radlader (etwa als oder in Kombination mit Drucksensoren an zumindest einem Hydraulikzylinder hiervon) verbunden, d. h., ein Fahrzeug weist eine Lasterfassungsvorrichtung für einen (Hebe-)Mechanismus auf. Zwischen dem Mechanismus und der Last ist bspw. die elektronische Schaltung oder die Wägezelle angeordnet.

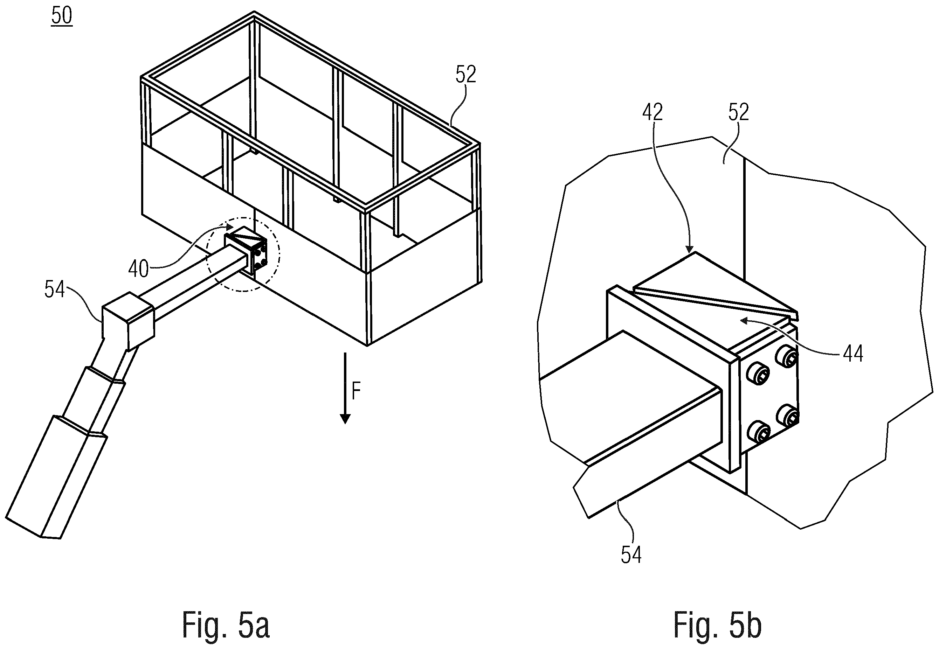

Fig. 5a zeigt eine schematische Ansicht einer Lasterfassungsvorrichtung 50 für eine Last 52, bspw. eine Arbeitsbühne. Die Lasterfassungsvorrichtung 50 umfasst einen Mechanismus 54, bspw. einen Kranmechanismus zum Bewegen der Arbeitsbühne 52, d. h., die Arbeitsbühne 52 ist als Hubarbeitsbühne realisierbar. Der Kranmechanismus 54 ist an einer Basis befestigbar. Zwischen dem Kranmechanismus 54 und der Arbeitsbühne 52 ist die Wägezelle 40 angeordnet. Die Arbeitsbühne 52 und der Kranmechanismus 54 sind durch die Wägezelle 40 miteinander verbunden. Das bedeutet, eine mechanische Verbindung existiert zwischen der Arbeitsbühne 52 und dem Kranmechanismus 54 über die Wägezelle 40. An der Arbeitsbühne kann eine Kraft F, bspw. durch ihr Gewicht und/oder einer Beladung derselben wirken, die zu einer Belastung auf den Kranmechanismus 54 führt, welche über die Wägezelle 40 erfassbar ist. Alternativ kann auch eine beliebige andere (ggf. externe) Krafteinwirkung auf die Arbeitsbühne wirken und erfasst werden.

Fig. 5b zeigt die Verbindungsstelle zwischen der Arbeitsbühne 52 und dem Kranmechanismus 54 in vergrößerter Darstellung. Die erste Seite 42 der Wägezelle ist mit der Arbeitsbühne 52 verbunden. Die zweite Seite 44 der Wägezelle ist mit dem Kranmechanismus 54 verbunden. Beispielsweise können Winkelbleche oder sonstige mechanische Verbindungselemente angeordnet sein, um eine mechanische Verbindung zwischen der Arbeitsbühne 52 oder dem Kranmechanismus 54 und der Wägezelle herzustellen. Die Anordnung der Wägezelle 40 zwischen dem Kranmechanismus 54 und der Arbeitsbühne 52 ermöglicht eine Erfassung einer Last, die die Arbeitsbühne 52 auf den Kranmechanismus 54 ausübt, etwa durch eine Gewichtskraft der Arbeitsbühne 52.

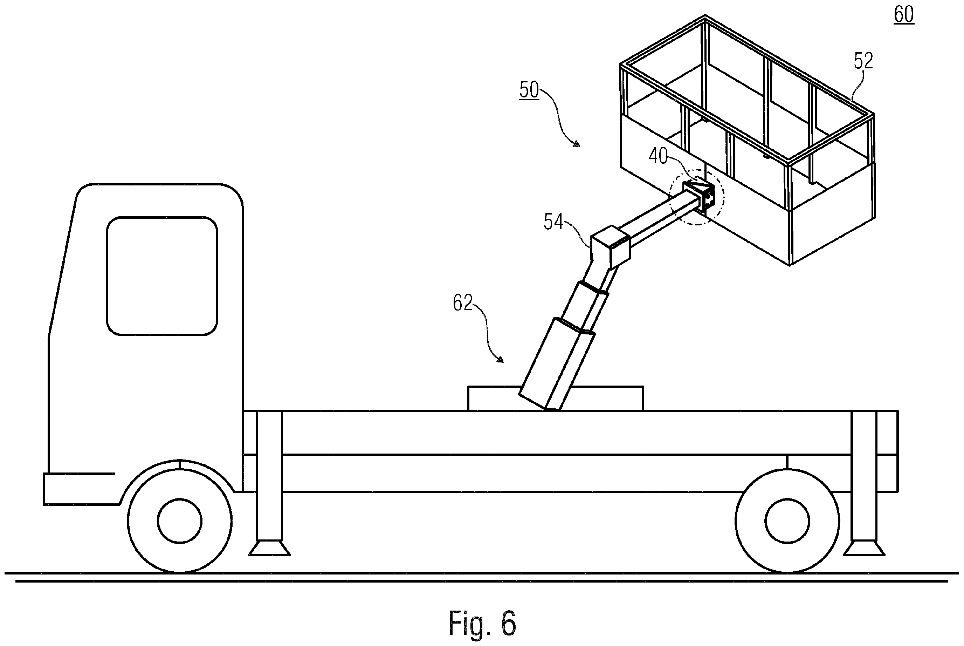

Fig. 6 zeigt eine schematische Darstellung eines Fahrzeugs 60, an dessen Chassis die Lasterfassungsvorrichtung 50 angeordnet ist. Hierfür ist bspw. die Basis des Kranmechanismus 54 an dem Fahrzeugchassis 62 befestigt. Die elektrische Schaltung der Wägezelle 40 kann in besonders einfacher und zuverlässiger Weise einen sicheren Betrieb der Lasterfassungsvorrichtung 50 und des Kranmechanismus 54 ermöglichen, da in jedem Betriebszustand des Kranmechanismus 54, d. h. auch in einem belasteten Zustand desselben bzw. in einem belasteten Zustand der Wägezelle 40 eine Funktionsüberprüfung der elektrischen Schaltung erfolgen kann, d. h., es kann festgestellt werden, ob ein Drift in der DMS-Vollbrückenschaltung vorliegt.

Die Ausführungsbeispiele der Fig. 5a, 5b und/oder 6 sind ohne weiteres auf andere Hubarbeitsmaschinen übertragbar.

Obwohl sich manche der hierin beschriebenen Ausführungsbeispiele auf elektronische Schaltungen und/oder Wägezellen in Kombination mit einem Fahrzeug beziehen, beziehen sich andere Ausführungsbeispiele auf stationäre Systeme. So kann ein Kranmechanismus auch als (Bau-)Kran oder als an einem Gebäuden montierter Kran realisiert sein und mit einer hierin beschriebenen Wägezelle kombiniert werden. Gemäß anderen Ausführungsbeispielen kann ein Belastungszustand einer beliebigen Struktur erfasst oder überwacht werden.

Hierin beschriebene Ausführungsbeispiele schaffen einen Indikator, der eine Erkennung einer Störung oder Zerstörung eines Gleichgewichts der DMS-Vollbrückenschaltung und anderer Wheatstone'scher Brückenschaltungen ermöglicht und lastunabhängig ein entsprechendes Signal liefert. Mithilfe der beiden Spannungsteiler in den Widerstandsserienschaltungen entstehen zwei Hilfsspannungen. In einer idealen Vollbrücke ist die Differenz zwischen diesen beiden Spannungen 0 V. Diese Prüfspannung U_{DRIFT} wird herangezogen, um eine Abweichung als Drift zu kennzeichnen. Vereinfacht kann eine Spannung von 0 V oder nahezu 0 V als "es liegt kein Drift vor" und eine Spannung von größer oder kleiner 0 V als "es liegt ein Drift vor" interpretiert werden. Die Funktion hierin beschriebener Ausführungsbeispiele ist belastungsunabhängig für unbelastete DMS-Vollbrückenschaltungen, belastete DMS-Vollbrückenschaltungen sowie für eine Veränderung eines DMS oder eines Referenzwiderstandes ermöglicht. Eine Veränderung eines DMS kann durch eine Vergleichseinrichtung erfasst und/oder signalisiert werden.

Mittels eines Drift-Indikators gemäß hierin beschriebenen Ausführungsbeispielen kann der Nullpunktdrift der Zelle, d. h. der DMS-Vollbrückenschaltung zu jedem Zeitpunkt oder jedem Betriebszustand, belastet oder unbelastet, gemessen werden. Das bedeutet auch, dass mit diesem absoluten Wert der Spannung U_{DRIFT} der gesamte Zellendrift zu jedem Zeitpunkt oder jedem Betriebszustand rechnerisch eliminiert werden kann. Dadurch, dass zwei Brücken verwendet werden, eine DMS-Messbrücke und eine Referenz-Messbrücke, die die Widerstände 24a-d umfassen kann, ist eine wechselweise Redundanz realisiert, was eine wechselseitige Überprüfung der Komponenten ermöglicht. Das bedeutet auch, dass eine Anordnung einer zweiten DMS-Vollbrücke entfallen kann.

Manche der vorangehend beschriebenen Ausführungsbeispiele beziehen sich auf Beispielwerte für physikalische Größen, etwa für Widerstände und/oder elektrische Spannungen. Diese Beispielwerte sollen weder bezogen auf Vorzeichen noch Zahlenwerte einschränkend wirken. Es versteht sich, dass basierend auf anderen Verschaltungen andere Werte erhalten werden können.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Wägezelle (40) mit einer ersten Seite (42) und einer zweiten Seite (44), die eine elektrische Schaltung (10; 20) aufweist, wobei die elektrische Schaltung folgendes aufweist:
eine Dehnungsmessstreifen-Vollbrückenschaltung (12);
eine erste Widerstandsserienschaltung (22a), die zwischen die Anschlüsse (16a, 16b) eines Energieversorgungstores der Dehnungsmessstreifen-Vollbrückenschaltung (12) geschaltet ist, und einen ersten Abgriff (26a) zwischen zwei Widerständen (24a, 24b) aufweist;
eine zweite Widerstandsserienschaltung (22b), die zwischen die Anschlüsse (18a, 18b) eines Signaltores der Dehnungsmessstreifen-Vollbrückenschaltung (12) geschaltet ist, und einen zweiten Abgriff (26b) zwischen zwei Widerständen (24c, 24d) aufweist; **gekennzeichnet durch**
eine Vergleichseinrichtung (28), die mit dem ersten Abgriff (26a) und dem zweiten Abgriff (26b) verbunden ist, und ausgebildet ist, um einen Vergleich zwischen einem ersten Spannungspotential an dem ersten Abgriff (26a) und einem zweiten Spannungspotential an dem zweiten Abgriff (26b) auszuführen;
wobei die elektrische Schaltung ausgebildet ist, um basierend auf einer mechanischen Belastung an der ersten Seite (42) basierend auf einer Kraft (F), die auf die zweite Seite (44) wirkt, ein Signal an dem Signaltor bereitzustellen.

2. Wägezelle gemäß Anspruch 1, bei der die Vergleichseinrichtung (28) ausgebildet ist, um basierend auf dem Vergleich ein Ausgangssignal (32) bereitzustellen, das einen Fehler eines der Dehnungsmessstreifen (14a-d) der Dehnungsmessstreifen-Vollbrückenschaltung (12) anzeigt.

3. Wägezelle gemäß Anspruch 1 oder 2, bei der die Vergleichseinrichtung (28) ausgebildet ist, um basierend auf dem Vergleich ein Ausgangssignal (32) bereitzustellen, das einen Fehler eines der Widerstände (24a-d) der ersten (22a) oder zweiten (22b) Widerstandsserienschaltung anzeigt.

4. Wägezelle gemäß Anspruch 2 oder 3, mit einem Alarmsignalgeber (34), der ausgebildet ist, um basierend auf dem Ausgangssignal (32) ein Alarmsignal (36) bereitzustellen.

5. Wägezelle gemäß einem der Ansprüche 1 bis 4, bei der die Vergleichseinrichtung (28) ausgebildet ist, um das zweite Spannungspotential bezüglich einer temperaturbasierten Veränderung eines Widerstands (24a-d) der ersten (22a) oder zweiten (22b) Widerstandsserienschaltung zu korrigieren, um eine Temperaturinformation (31) zu empfangen, die eine Temperatur an dem zu korrigierenden Widerstand (24a-d) anzeigt, und um die temperaturbasierte Veränderung des zu korrigierenden Widerstands (24a-d) basierend auf der Temperaturinformation (31) zu korrigieren.

6. Wägezelle gemäß einem der Ansprüche 1 bis 5, bei der die Vergleichseinrichtung (28) ausgebildet ist, um ein Ausgangssignal (32) unabhängig von einer Verformung der Dehnungsmessstreifen (24a-d) zu liefern.

7. Wägezelle gemäß einem der Ansprüche 1 bis 6, bei der die Vergleichseinrichtung (28) ausgebildet ist, um den Vergleich in einem Referenzzustand und in einem Belastungszustand der Dehnungsmessstreifen-Vollbrückenschaltung (12) auszuführen.

8. Wägezelle gemäß einem der Ansprüche 1 bis 7, bei der die Vergleichseinrichtung (28) ausgebildet ist, um ein Ausgangssignal (32) bereitzustellen, wenn ein Vergleichswert des Vergleichs einen Schwellwert erreicht oder überschreitet.

9. Wägezelle gemäß einem der Ansprüche 1 bis 8, bei der die Vergleichseinrichtung (28) ausgebildet ist, um ein Ausgangssignal (32) so auszugeben, dass bei einer Gleichheit des ersten Spannungspotentials und des zweiten Spannungspotentials angezeigt wird, dass kein Drift vorliegt, und dass bei einer Ungleichheit des ersten Spannungspotentials und des zweiten Spannungspotentials angezeigt wird, dass ein Drift vorliegt.

10. Lasterfassungsvorrichtung (50) für eine Hubarbeitsmaschine (52) mit folgenden Merkmalen:
einem Mechanismus (54) zum Bewegen einer Last (52), wobei der Mechanismus (54) an einer Basis befestigbar ist; und
einer zwischen dem Mechanismus (54) und der Last (52) angeordneten Wägezelle (40) gemäß einem der vorangehenden Ansprüche;
wobei der Mechanismus (54) und die Last (52) durch die Wägezelle (40) miteinander verbunden sind.

11. Lasterfassungsvorrichtung (50) gemäß Anspruch 10, bei der der Mechanismus (54) ein Kranmechanismus ist, und bei der die Last (52) eine Arbeitsbühne ist.

12. Fahrzeug (60) mit einer Lasterfassungsvorrichtung (50) gemäß Anspruch 10 oder 11, bei dem der Mechanismus (54) an einem Fahrzeugchassis befestigt ist.

## Claims

1. A load cell (40) having a first side (42) and a second side (44), comprising an electrical circuit (10; 20), the electrical circuit comprising:
a strain gauge full bridge circuit (12);
a first resistor series circuit (22a) connected between the terminals (16a, 16b) of an energy supply gate of the strain gauge full bridge circuit (12) and comprising a first tap (26a) between two resistors (24a, 24b);
a second resistor series circuit (22b) connected between the terminals (18a, 18b) of a signal gate of the strain gauge full bridge circuit (12) and comprising a second tap (26b) between two resistors (24c, 24d); **characterized by**
comparing means (28) connected to the first tap (26a) and the second tap (26b) and configured to perform a comparison between a first voltage potential at the first tap (26a) and a second voltage potential at the second tap (26b);
wherein the electrical circuit is configured to provide a signal at the signal gate based on a mechanical loading at the first side (42) based on a force (F) acting on the second side (44).

2. The load cell in accordance with claim 1, wherein the comparing means (28) is configured to provide, based on the comparison, an output signal (32) which indicates an error of one of the strain gauges (14a-d) of the strain gauge full bridge circuit (12).

3. The load cell in accordance with claim 1 or 2, wherein the comparing means (28) is configured to provide, based on the comparison, an output signal (32) which indicates an error of one of the resistors (24a-d) of the first (22a) or second (22b) resistor series circuit.

4. The load cell in accordance with claim 2 or 3, comprising an alarm signaling unit (34) configured to provide an alarm signal (36) based on the output signal (32).

5. The load cell in accordance with any of claims 1 to 4, wherein the comparing means (28) is configured to correct the second voltage potential relative to a temperature-based change of a resistor (24a-d) of the first (22a) or second (22b) resistor series circuit in order to receive temperature information (31) indicating a temperature at the resistor (24a-d) to be corrected and to correct the temperature-based change of the resistor (24a-d) to be corrected based on the temperature information (31).

6. The load cell in accordance with any of claims 1 to 5, wherein the comparing means (28) is configured to provide an output signal (32) irrespective of a deformation of the strain gauges (24a-d).

7. The load cell in accordance with any of claims 1 to 6, wherein the comparing means (28) is configured to perform the comparison in a reference state and in a load state of the strain gauge full bridge circuit (12).

8. The load cell in accordance with any of claims 1 to 7, wherein the comparing means (28) is configured to provide an output signal (32) when a comparison value of the comparison reaches or exceeds a threshold value.

9. The load cell in accordance with any of claims 1 to 8, wherein the comparing means (28) is configured to output an output signal (32) such that there is no drift when the first voltage potential and the second voltage potential are indicated to be equal and that there is drift when the first voltage potential and the second voltage potential are indicated not to be equal.

10. A load detection device (50) for a lifting machine (52), comprising:
a mechanism (54) for moving a load (52), wherein the mechanism (54) may be mounted to a base; and
a load cell (40) according to any of the preceding claims arranged between the mechanism (54) and the load (52);
wherein the mechanism (54) and the load (52) are connected to each other by the load cell (40).

11. The load detection device (50) in accordance with claim 10, wherein the mechanism (54) is a crane mechanism, and wherein the load (52) is a working platform.

12. A vehicle (60) comprising a load detection device (50) in accordance with claim 10 or 11, wherein the mechanism (54) is mounted to a vehicle chassis.

## Revendications

1. Cellule de pesage (40) avec un premier côté (42) et un deuxième côté (44) présentant un circuit électrique (10; 20), dans laquelle le circuit électrique présente:
un circuit en pont complet à jauges de contrainte (12);
un premier circuit série de résistances (22a) connecté entre les bornes (16a, 16b) d'une porte d'alimentation du circuit en pont complet à jauges de contrainte (12) et présentant une première prise (26a) entre deux résistances (24a, 24b);
un deuxième circuit série de résistances (22b) connecté entre les bornes (18a, 18b) d'une porte de signal du circuit en pont complet à jauges de contrainte (12), et présentant une deuxième prise (26b) entre deux résistances (24c, 24d);
**caractérisée par**
un moyen de comparaison (28) qui est couplé à la première prise (26a) et à la deuxième prise (26b) et qui est conçu pour effectuer une comparaison entre un premier potentiel de tension à la première prise (26a) et un deuxième potentiel de tension à la deuxième prise (26b);
dans laquelle le circuit électrique est conçu pour mettre à disposition, sur base d'une charge mécanique sur le premier côté (42) sur base d'une force (F) agissant sur le deuxième côté (44), un signal à la porte de signal.

2. Cellule de pesage selon la revendication 1, dans laquelle le moyen de comparaison (28) est conçu pour mettre à disposition, sur base de la comparaison, un signal de sortie (32) qui indique une erreur de l'une des jauges de contrainte (14a à d) du circuit en pont complet à jauges de contrainte (12).

3. Cellule de pesage selon la revendication 1 ou 2, dans laquelle le moyen de comparaison (28) est conçu pour mettre à disposition, sur base de la comparaison, un signal de sortie (32) qui indique une erreur de l'une des résistances (24a à d) du premier (22a) ou deuxième (22b) circuit série de résistances.

4. Cellule de pesage selon la revendication 2 ou 3, avec un émetteur de signal d'alarme (34) qui est conçu pour mettre à disposition, sur base du signal de sortie (32), un signal d'alarme (36).

5. Cellule de pesage selon l'une des revendications 1 à 4, dans laquelle le moyen de comparaison (28) est conçu pour corriger le deuxième potentiel de tension en ce qui concerne un changement sur base de la température d'une résistance (24a à d) du premier (22a) ou du deuxième (22b) circuit série de résistances, pour recevoir une information de température (31) qui indique une température à la résistance à corriger (24a à d), et pour corriger le changement sur base de la température de la résistance (24a à d) à corriger sur base de l'information de température (31).

6. Cellule de pesage selon l'une des revendications 1 à 5, dans laquelle le moyen de comparaison (28) est conçu pour fournir un signal de sortie (32) indépendamment d'une déformation des jauges de contrainte (24a à d).

7. Cellule de pesage selon l'une des revendications 1 à 6, dans laquelle le moyen de comparaison (28) est conçu pour effectuer la comparaison dans un état de référence et dans un état de charge du circuit en pont complet à jauges de contrainte (12).

8. Cellule de pesage selon l'une des revendications 1 à 7, dans laquelle le moyen de comparaison (28) est conçu pour mettre à disposition un signal de sortie (32) lorsqu'une valeur de la comparaison atteint ou excède une valeur de seuil.

9. Cellule de pesage selon l'une des revendications 1 à 8, dans laquelle le moyen de comparaison (28) est conçu pour sortir un signal de sortie (32) de sorte qu'il soit indiqué, en cas d'égalité du premier potentiel de tension et du deuxième potentiel de tension est indiquée, qu'il n'existe pas de dérive et qu'il soit indiqué, en cas d'une inégalité du premier potentiel de tension et du deuxième potentiel de tension, qu'il existe une dérive.

10. Dispositif de détection de charge (50) pour une machine de levage (52), aux caractéristiques suivantes:
un mécanisme (54) destiné à déplacer une charge (52), où le mécanisme (54) peut être fixé à une base; et
une cellule de pesage (40) selon l'une des revendications précédentes disposée entre le mécanisme (54) et la charge (52);
dans lequel le mécanisme (54) et la charge (52) sont connectés l'un à l'autre par l'intermédiaire de la cellule de pesage (40).

11. Dispositif de détection de charge (50) selon la revendication 10, dans lequel le mécanisme (54) est un mécanisme de grue, et dans lequel la charge (52) est une plate-forme de travail.

12. Véhicule (60) avec un dispositif de détection de charge (50) selon la revendication 10 ou 11, dans lequel le mécanisme (54) est fixé à un châssis de véhicule.
